# EUROPÄISCHE PATENTSCHRIFT

(11) **EP 4 061 570 B1**
(45) Veröffentlichungstag und Bekanntmachung des Hinweises auf die Patenterteilung: **07.06.2023**
(21) Anmeldenummer: 20816893.0
(22) Anmeldetag: 16.11.2020
(51) Int. Cl.: B23F 19/10, B23F 21/00, B23B 27/00, B23B 51/10

(54) **VERFAHREN UND VORRICHTUNG ZUM ENTGRATEN EINES INNENVERZAHNTEN WERKSTÜCKS**
METHOD AND DEVICE FOR DEBURRING A WORKPIECE WITH AN INNER TOOTHING
PROCÉDÉ ET DISPOSITIF D'ÉBAVURAGE D'UNE PIÈCE À TRAVAILLER AVEC UNE DENTURE INTERNE

(30) Priorität: 20.11.2019 DE 102019131266
(43) Veröffentlichungstag der Anmeldung: 28.09.2022
(73) Patentinhaber: Schaeffler Technologies AG & Co. KG, 91074 Herzogenaurach (DE)
(72) Erfinder: SIEBENLIST, Norbert, 97490 Poppenhausen (DE)
(86) Internationale Anmeldenummer: PCT/DE2020/100973
(87) Internationale Veröffentlichungsnummer: WO 2021/098915

(56) Entgegenhaltungen:
- EP-A1- 2 269 753
- CN-A- 107 717 136
- DE-A1-102014 008 475
- DE-A1-102015 104 242

## Beschreibung

Die Erfindung betrifft ein Verfahren zum Entgraten eines Werkstücks, welches eine Innenverzahnung aufweist. Weiter betrifft die Erfindung ein zur Durchführung eines solchen Verfahrens geeignetes Entgratwerkzeug.

Verzahnungen von Werkstücken sind rationell beispielsweise durch Wälzschälen herstellbar. Beispielhaft wird in diesem Zusammenhang auf die Dokumente DE 10 2014 008 475 A1, EP 2 537 615 A1 und WO 2015/036098 A2 hingewiesen. Im letztgenannten Dokument wird insbesondere auf die Kühlung beim Wälzschälen eingegangen. Die DE 10 2014 008 475 A1 offenbart den Einsatz eines rotationssymmetrischen Schälrades.

Auch zur Fertigung einer Fase an einem Werkstück ist Wälzschälen grundsätzlich geeignet. Details entsprechender Bearbeitungsverfahren sind in den Dokumenten DE 10 2017 204 891 A1 und DE 10 2014 218 082 A1 offenbart.

Durch Wälzschälen können, wie bei anderen Bearbeitungsverfahren auch, Grate am Werkstück entstehen, welche in einem späteren Bearbeitungsschritt zu entfernen sind. Hinsichtlich möglicher Gestaltungen von Vorrichtungen zum Entgraten wird auf die Dokumente DE 36 08 458 C1, DE 103 09 116 A1 und DE 10 2014 010 824 A1 hingewiesen.

Die DE 10 2015 104 242 A1 beschreibt ein Verfahren zur Fertigung von Zahnrädern unter Verwendung eines Kombiwerkzeugs umfassend ein rotationssymmetrisches Schälrad zur Ausbildung einer Verzahnung und ein Zahnbearbeitungswerkzeug zur Spanenden Bearbeitung zumindest einiger Zähne der Verzahnung.

Der Erfindung liegt die Aufgabe zugrunde, die Entgratung eines Werkstücks, welches eine Innenverzahnung aufweist, die durch Wälzschälen hergestellt wurde, besonders rationell und prozesssicher zu gestalten.

Diese Aufgabe wird erfindungsgemäß gelöst durch ein Verfahren zum Entgraten eines innenverzahnten Werkstücks mit den Merkmalen des Anspruchs 1. Ebenso wird die Aufgabe gelöst durch eine Vorrichtung mit den Merkmalen des Anspruchs 5. Die im Folgenden im Zusammenhang mit der Vorrichtung, das heißt den Entgratwerkzeug, erläuterten Ausgestaltungen und Vorteile der Erfindung gelten sinngemäß auch für das Entgratverfahren und umgekehrt.

Das Entgratverfahren umfasst folgende Schritte:
- Bereitstellung eines eine Symmetrieachse aufweisenden Werkstücks mit einer durch Wälzschälen hergestellten Innenverzahnung,
- Bereitstellung eines mindestens eine erste Schneidplatte und eine zweite Schneidplatte aufweisenden Entgratwerkzeugs, wobei sich die beiden Schneidplatten bezüglich einer Mittelachse des Entgratwerkzeugs diametral gegenüberliegen,
- Rotation des Werkstücks in einer ersten Rotationsrichtung, wobei Zahnflanken der Innenverzahnung mit dem hierbei nicht rotierenden Entgratwerkzeug mittels der ersten Schneidplatte entgratet werden und die Mittelachse des Entgratwerkzeugs parallel zur Symmetrieachse des Werkstücks angeordnet ist,
- Verlagerung des Entgratwerkzeugs gegenüber dem Werkstück unter Wahrung der Parallelität zwischen der Symmetrieachse und der Mittelachse derart, dass keine der Schneidplatten das Werkstück kontaktiert,
- Umkehrung des Rotationsrichtung des Werkstücks,
- Weitere Verlagerung des Entgratwerkzeugs gegenüber dem Werkstück unter Wahrung der Parallelität zwischen der Symmetrieachse und der Mittelachse und Entgratung von Zahnflanken der Innenverzahnung mit dem hierbei nicht rotierenden Entgratwerkzeug mittels der zweiten Schneidplatte.

Die Begriffe "Symmetrieachse" (stets im Zusammenhang mit dem Werkstück) und "Mittelachse" (stets im Zusammenhang mit dem Entgratwerkzeug) sind lediglich zur sprachlichen Unterscheidung gewählt und implizieren keine Informationen über Unterschiede zwischen den Symmetrieeigenschaften des Werkstücks einerseits und des Werkzeugs andererseits.

Zusätzlich zur Innenverzahnung weist das Werkstück optional eine Außenverzahnung auf. Die Herstellung und eventuelle Entgratung einer solchen Verzahnung an der Au-ßenumgangsfläche des insgesamt ringförmigen Werkstücks kann auf beliebige, konventionelle Weise erfolgen, wobei hierbei das Entgratwerkzeug nicht zum Einsatz kommt.

In bevorzugter Verfahrensführung erfolgt sowohl mittels der ersten Schneideplatte als auch mittels der zweiten Schneideplatte ein stirnseitiges Entgraten der Innenverzahnung des Werkstücks. Die Form beider Schneidplatten ist vorzugsweise identisch. Die Schneidplatten sind in konventioneller Weise zum Beispiel aus Hartmetall gefertigt. In diesem Zusammenhang wird beispielhaft auf das Dokument DE 20 2011 050 704 U1 hingewiesen.

Das zum Entgraten verwendete Entgratwerkzeug oder Werkzeug hat eine T-förmige Grundform, welche durch einen längs der Mittelachse ausgerichteten Schaft und einen quer zum Schaft angeordneten Schneidplattenhalteabschnitt gebildet ist. An dem Schneidplattenhalteabschnitt, der den Querbalken des T's darstellt, sind zwei sich bezüglich der Mittelachse diametral gegenüberliegende Schneidplatten befestigt, die bezüglich einer durch die Mittelachse gelegten Ebene spiegelsymmetrisch zueinander ausgebildet sind, wobei die zum Entgraten vorgesehenen Schneidkanten der Schneidplatten dem Schaft zugewandt sind.

Während des gesamten, nacheinander mit den beiden Schneidplatten durchgeführten Verfahrens bleibt der Schaft des Entgratwerkzeugs vorzugsweise in dem von der Innenverzahnung umschlossenen Hohlraum des Werkstücks angeordnet.

Die im Zuge der sukzessive durchgeführten Entgratvorgänge im Eingriff mit dem Werkstück befindlichen Schneidkanten der Schneidplatten sind näherungsweise längs ein und derselben Geraden ausgerichtet. Beispielsweise ist zwischen den Schneidkanten ein Winkel von mindestens 165° und höchstens 178° eingeschlossen. Auch kleinere oder größere Winkel, die zwischen den Schneidkanten eingeschlossen sind, insbesondere ein Winkel von 180°, sind möglich. Bei den Schneidplatten handelt es sich zum Beispiel um Wendeschneideplatten, welche auf den Grundkörper des Entgratwerkzeugs aufgelötet, geklemmt oder aufgeschraubt sind.

Zwischen der Bearbeitung des innenverzahnten Werkstücks mit der ersten Schneidplatte und der Bearbeitung des Werkstücks mit der zweiten Schneidplatte kann ein Leerhub des Wälzschälens erfolgen. Insgesamt kann das Wälzschälen mehrere Durchgänge, zunächst als Schruppen, anschließend als Schlichten, umfassen.

Im Unterschied zu gängigen Fräsern, wie sie beispielsweise in der DE 196 24 342 C1 beschrieben sind, bei denen mehrere am Umfang des Fräsers angeordnete Schneidplatten in dieselbe Umfangsrichtung weisen, sind bei dem anmeldungsgemäßen Entgratwerkzeug, das einen Drehstahl ersetzt, die Schneidplatten in entgegengesetzte Umfangsrichtungen ausgerichtet. Dies bedeutet, dass beim Blick auf das Entgratwerkzeug beispielsweise die Oberseiten beider Schneidplatte sichtbar sind. Insbesondere liegen die Oberseiten beider Schneidplatten in einer gemeinsamen Ebene. Eine der Schneidplatten dient beispielsweise dem Entgraten sämtlicher linker Zahnflanken der Innenverzahnung, wogegen die andere Schneidplatte gezielt zum Entgraten der rechten Zahnflanken vorgesehen ist. Nach dem mit dem Entgratwerkzeug durchgeführten Doppelflankenentgraten ist in typischen Anwendungsfällen kein zusätzlicher Arbeitsgang zur mechanischen Bearbeitung der Innenverzahnung erforderlich.

Kurz gefasst wird ein Werkstück, nämlich innenverzahntes Zahnrad, wird mit einem zwei Schneidplatten aufweisenden, nicht rotierenden Entgratwerkzeug entgratet, indem das Werkstück zunächst in einer ersten Rotationsrichtung rotiert, wobei Zahnflanken der Innenverzahnung des Werkstücks mittels der ersten Schneidplatte entgratet werden, und in einer späteren Bearbeitungsphase, in welcher das Werkstück in der entgegengesetzten Richtung rotiert, weitere Zahnflanken der Innenverzahnung mittels der zweiten Schneidplatte entgratet werden.

Nachfolgend wird ein Ausführungsbeispiel der Erfindung anhand einer Zeichnung näher erläutert. Hierin zeigen:
- Fig. 1: ein innenverzahntes Werkstück in geschnittener Darstellung,
- Fig. 2: das Werkstück während eines ersten, mit einem Entgratwerkzeug durchgeführten Entgratvorgangs,
- Fig. 3: das Werkstück während eines zweiten, mit dem Entgratwerkzeug durch-geführten Entgratvorgangs,
- Fig. 4: das innenverzahnte Werkstück in perspektivischer Ansicht,
- Fig. 5: einen Zahn der Innenverzahnung des Werkstücks, und
- Fig. 6: ein Entgratwerkzeug.

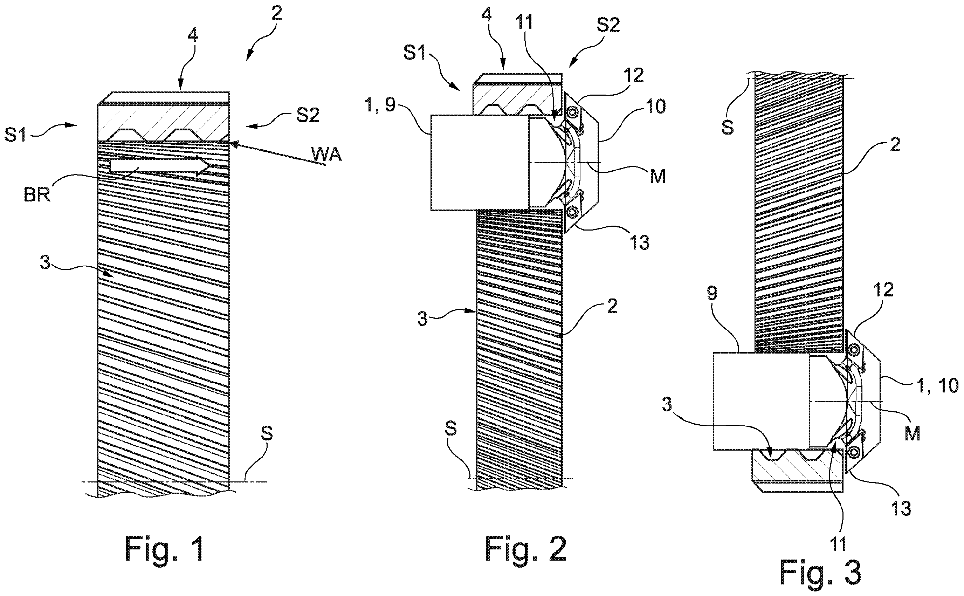

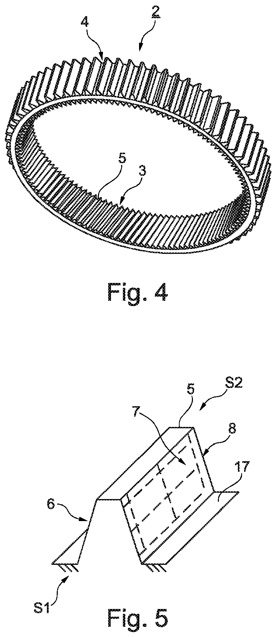

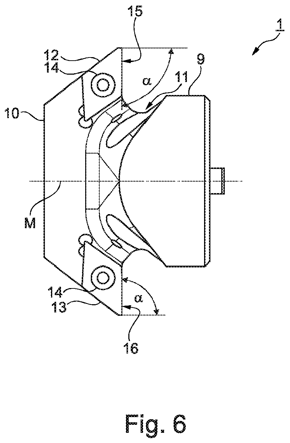

Ein in den Figuren 1 und 4 isoliert dargestelltes Werkstück 2 wird in einem in den Figuren 2 und 3 veranschaulichten Verfahren mit einem Entgratwerkzeug 1 gemäß Figur 6, kurz auch als Werkzeug bezeichnet, bearbeitet.

Ausgangpunkt des Bearbeitungsverfahrens ist die Bereitstellung des Werkstücks 2 in dem in Fig. 1 dargestellten Zustand, in welchem bereits eine mit 3 bezeichnete Innenverzahnung des Werkstücks 2, das heißt Zahnrades, vorhanden ist. Die Innenverzahnung 3 wurde zuvor in an sich bekannter Weise durch Wälzschälen hergestellt. Zusätzlich weist das Werkstück 2 eine Außenverzahnung 4 auf, die im Rahmen des anhand der Figuren erläuterten Verfahrens nicht bearbeitet wird.

Die Innenverzahnung 3 ist im vorliegenden Fall als Schrägverzahnung ausgeführt, deren einzelne Zähne mit 5 bezeichnet sind. Jeder Zahn 5 weist zwei Flanken 6, 7, das heißt Zahnflanken, auf, welche an die mit S1, S2 bezeichneten Stirnseiten des Zahnrades 2 grenzen. Beim Wälzschälen erfolgte die Bearbeitung des Werkstücks 2 in Richtung von der ersten Stirnseite S1 zur zweiten Stirnseite S2. Das Wälzschälen umfasst Schruppen in mehreren Durchgängen und anschließendes Schlichten in ein bis zwei Durchgängen. Die Bearbeitungsrichtung BR ist in Fig. 1 mit einem Pfeil gekennzeichnet. Am Werkzeugaustritt WA, das heißt auf der zweiten Stirnseite S2, ergeben sich durch das Wälzschälen Grate an Kanten 8 der Zahnflanken 6, 7 sowie der mit 17 bezeichneten Zahnfüße.

Das zum Entgraten der Zähne 5 verwendete Werkzeug 1 beschreibt eine aus den Figuren 2, 3 und 5 hervorgehende T-Form mit einem Schaft 9 und einem an diesen anschließenden T-Querstück 10, welches als Schneidplattenhalteabschnitt fungiert. Zwischen dem Schaft 9 und dem Schneidplattenhalteabschnitt 10 ist eine Einschnürung 11 erkennbar. Der Schaft 9 weist eine Mittelachse M auf, die in den Anordnungen nach den Figuren 2 und 3 parallel zu der mit S bezeichneten Symmetrieachse des Werkstücks 2 ausgerichtet ist. Der Schaft 9 befindet sich in diesen Anordnungen innerhalb des von der Innenverzahnung 3 umschlossenen Hohlraums. Von einer nicht dargestellten Halterung des Schaftes 9 aus gesehen stellt die mit dem Werkzeug 1 zu bearbeitende Stirnseite S2 des Werkstücks 2 somit dessen Rückseite dar.

Am T-Querstück 10 des Werkzeugs 1 sind zwei Schneidplatten 12, 13, nämlich Wendeschneidplatten, mit Schrauben 14 befestigt. Bezüglich einer durch die Mittelachse M gelegten Ebene sind die Schneidplatten 12, 13 spiegelsymmetrisch zueinander ausgebildet. Die Symmetrie gilt auch für eventuelle Klemmstücke. Jede Schneidplatte 12, 13 weist eine im Rahmen des vorliegenden Verfahrens zum Einsatz kommende Schneidkante 15, 16 auf. Zwischen jeder Schneidkante 15, 16 und einer zur Mittelachse M parallelen Gerade wird, wie aus Fig. 5 hervorgeht, ein Winkel α eingeschlossen. Im Ausführungsbeispiel beträgt der Winkel α 87,2°. Somit ist zwischen den beiden Schneidkanten 15, 16, die zur stirnseitigen Bearbeitung des Werkstücks 2 vorgesehen sind, im vorliegenden Fall ein Winkel (2 x α) von 174,4° eingeschlossen.

Bei der Entgratung des Werkstücks 2 wird zunächst die Schneidkante 15 der Schneidplatte 12 verwendet, wie in Fig. 2 veranschaulicht ist. Das Werkstück 2 rotiert hierbei im Gegenuhrzeigersinn. Das Werkzeug 1 rotiert nicht. Bei diesem Vorgang werden hauptsächlich die an Zahnflanken 7 befindlichen Grate entfernt.

Nach der Beendigung dieses Arbeitsschrittes erfolgt ein Leerhub des Wälzschälens, der in den Figuren nicht dargestellt ist. Anschließend wird das Werkzeug 1 in die in Fig. 3 erkennbare Position verfahren, wobei sich die Winkelausrichtung des Werkzeugs 1, bezogen auf die Orientierung des T-Querstücks 9, nicht ändert. Im dargestellten Ausführungsbeispiel bedeutet dies, dass sich die Schneidplatte 12 unverändert oberhalb der Mittelachse M und die Schneidplatte 13 unverändert unterhalb der Mittelachse M befindet. Selbstverständlich ist die Orientierung der Achsen M, S im Raum beliebig, wobei die Achsen M, S bei der Entgratung stets parallel zueinander ausgerichtet sind. Alternativ zur dargestellten Anordnung von Werkstück 2 und Werkzeug 1 ist beispielsweise eine vertikale Ausrichtung der Achsen M, S möglich.

In dem in Fig. 3 dargestellten Zustand rotiert das Werkstück 2 im Uhrzeigersinn, wobei hauptsächlich die Grate an den Zahnflanken 6 entfernt werden. Weitere Bearbeitungsschritte zum Entgraten des Werkstücks 2, etwa ein Bürsten, sind meist nicht erforderlich. Im Vergleich mit herkömmlichen Entgratverfahren ist damit eine besonders rationelle und zugleich effiziente Bearbeitung gegeben.

### Bezugszeichenliste

- 1: Entgratwerkzeug, Werkzeug
- 2: Werkstück, innenverzahnt
- 3: Innenverzahnung
- 4: Außenverzahnung
- 5: Zahn
- 6: Zahnflanke
- 7: Zahnflanke
- 8: Kante
- 9: Schaft
- 10: T-Querstück, Schneidplattenhalteabschnitt
- 11: Einschnürung
- 12: Schneidplatte
- 13: Schneidplatte
- 14: Schraube
- 15: Schneidkante
- 16: Schneidkante
- 17: Zahnfuß

- α: Winkel
- BR: Bearbeitungsrichtung
- M: Mittelachse
- S: Symmetrieachse
- S1: Stirnseite
- S2: Stirnseite
- WA: Werkzeugaustritt

## Patentansprüche

1. Verfahren zum Entgraten eines innenverzahnten Werkstücks (2), mit folgenden Schritten:
- Bereitstellung eines eine Symmetrieachse (S) aufweisenden Werkstücks (2) mit einer durch Wälzschälen hergestellten Innenverzahnung (3),
- Bereitstellung eines eine erste Schneidplatte (12) und eine zweite Schneidplatte (13) aufweisenden Entgratwerkzeugs (1), wobei sich die Schneidplatten (12, 13) bezüglich einer Mittelachse (M) des Entgratwerkzeugs (1) diametral gegenüberliegen,
- Rotation des Werkstücks (2) in einer ersten Rotationsrichtung, wobei Zahnflanken (7) der Innenverzahnung (3) mit dem hierbei nicht rotierenden Entgratwerkzeug (1) mittels der ersten Schneidplatte (12) entgratet werden und die Mittelachse (M) des Entgratwerkzeugs (1) parallel zur Symmetrieachse (S) des Werkstücks (2) angeordnet ist,
- Verlagerung des Entgratwerkzeugs (1) gegenüber dem Werkstück (2) unter Wahrung der Parallelität zwischen der Symmetrieachse (S) und der Mittelachse (M) derart, dass keine der Schneidplatten (12, 13) das Werkstück (2) kontaktiert,
- Umkehrung des Rotationsrichtung des Werkstücks (2),
- Weitere Verlagerung des Entgratwerkzeugs (1) gegenüber dem Werkstück (2) unter Wahrung der Parallelität zwischen der Symmetrieachse (S) und der Mittelachse (M) und Entgratung von Zahnflanken (6) der Innenverzahnung (3) mit dem hierbei nicht rotierenden Entgratwerkzeug (1) mittels der zweiten Schneidplatte (13).

2. Verfahren nach Anspruch 1, **dadurch gekennzeichnet, dass** sowohl mittels der ersten Schneidplatte (12) als auch mittels der zweiten Schneidplatte (13) ein stirnseitiges Entgraten des Werkstücks (2) erfolgt.

3. Verfahren nach Anspruch 2, **dadurch gekennzeichnet, dass** während des gesamten, mit den beiden Schneidplatten (12, 13) durchgeführten Entgratvorgangs ein Schaft (9) des Entgratwerkzeugs (1) in dem von der Innenverzahnung (3) umschlossenen Hohlraum des Werkstücks (2) angeordnet bleibt.

4. Verfahren nach einem der Ansprüche 1 bis 3, **dadurch gekennzeichnet, dass** zwischen der Bearbeitung des Werkstücks (2) mit der ersten Schneidplatte (12) und der Bearbeitung des Werkstücks (2) mit der zweiten Schneidplatte (13) ein Leerhub des Wälzschälens erfolgt.

5. Werkzeug (1) zum Entgraten eines innenverzahnten Werkstücks (2), mit einer T-förmigen Grundform, welche durch einen eine Mittelachse (M) definierenden Schaft (9) und einen quer zu diesem ausgerichteten Schneidplattenhalteabschnitt (10) gebildet ist, der den Querbalken des T's darstellt und an welchem zwei sich bezüglich der Mittelachse (M) diametral gegenüberliegende Schneidplatten (12, 13) befestigt sind, die bezüglich einer durch die Mittelachse (M) gelegten Ebene spiegelsymmetrisch zueinander ausgebildet sind, wobei Schneidkanten (15, 16) der Schneidplatten (12, 13) dem Schaft (9) zugewandt sind.

6. Werkzeug (1) nach Anspruch 5, **dadurch gekennzeichnet, dass** zwischen den Schneidkanten (15, 16) ein Winkel (2 x α) von mindestens 165° und höchstens 178° eingeschlossen ist.

7. Werkzeug nach Anspruch 5 oder 6, **dadurch gekennzeichnet, dass** die Schneidplatten (12, 13) als Wendeschneidplatten ausgebildet sind.

## Claims

1. A method for deburring an internally toothed workpiece (2), having the following steps:
- providing a workpiece (2) having an axis of symmetry (S) with an internal toothing (3) produced by hob peeling,
- providing a deburring tool (1) having a first cutting plate (12) and a second cutting plate (13), wherein the cutting plates (12, 13) lie diametrically opposed to one another with respect to a central axis (M) of the deburring tool (1),
- rotating the workpiece (2) in a first rotating direction, wherein tooth flanks (7) of the internal toothing (3) are deburred with the deburring tool (1) while it is not rotating by means of the first cutting plate (12), and the central axis (M) of the deburring tool (1) is arranged parallel to the axis of symmetry (S) of the workpiece (2),
- shifting the deburring tool (1) relative to the workpiece (2) while keeping the axis of symmetry (S) parallel to the central axis (M) such a way that none of the cutting plates (12, 13) make contact with the workpiece (2),
- reversing the rotating direction of the workpiece (2),
- further shifting the deburring tool (1) with respect to the workpiece (2) while keeping the axis of symmetry (S) parallel to the central axis (M) and deburring the tooth flanks (6) of the internal toothing (3) with the deburring tool (1) while it is not rotating by means of the second cutting plate (13).

2. The method according to claim 1, **characterised in that** the front side of the workpiece (2) is deburred both by means of the first cutting plate (12) and by means of the second cutting plate (13).

3. The method according to claim 2, **characterised in that** a shaft (9) of the deburring tool (1) remains arranged in the cavity of the workpiece (2) enclosed by the internal toothing (3) throughout the deburring process carried out with the two cutting plates (12, 13).

4. The method according to any one of claims 1 to 3, **characterised in that,** between the machining of the workpiece (2) with the first cutting plate (12) and the machining of the workpiece (2) with the second cutting plate (13), an idle stroke of the hob peeling takes place.

5. A tool (1) for deburring an internally toothed workpiece (2), having a T-shaped base, which is formed by a shaft (9) defining a central axis (M) and a cutting plate holding section (10) aligned transversely to the shaft, and which represents the crossbeam of the T's and on which two cutting plates (12, 13) diametrically opposed to one another with respect to the central axis (M) are fastened, which are formed mirror-symmetrically with respect to one another with respect to a plane passing through the central axis (M), wherein the cutting edges (15, 16) of the cutting plates (12, 13) face the shaft (9).

6. The tool (1) according to claim 5, **characterised in that** an angle (2 x α) of at least 165° and at most 178° is formed between the cutting edges (15, 16).

7. The tool according to claim 5 or 6, **characterised in that** the cutting plates (12, 13) are designed as indexable inserts.

## Revendications

1. Procédé d'ébavurage d'une pièce à travailler à denture interne (2), comprenant les étapes suivantes :
- préparation d'une pièce à travailler (2) présentant un axe de symétrie (S) avec une denture interne (3) réalisée par taillage,
- préparation d'un outil d'ébavurage (1) présentant une première plaque de coupe (12) et une seconde plaque de coupe (13), les plaques de coupe (12, 13) étant diamétralement opposées l'une à l'autre par rapport à un axe central (M) de l'outil d'ébavurage (1),
- rotation de la pièce à travailler (2) dans un premier sens de rotation, les flancs de dent (7) de la denture interne (3) étant ébavurés par l'outil d'ébavurage (1), ce faisant non rotatif, au moyen de la première plaque de coupe (12) et l'axe central (M) de l'outil d'ébavurage (1) est agencé parallèlement à l'axe de symétrie (S) de la pièce à travailler (2),
- déplacement de l'outil d'ébavurage (1) par rapport à la pièce à travailler (2) tout en maintenant le parallélisme entre l'axe de symétrie (S) et l'axe central (M) de manière à ce qu'aucune des plaques de coupe (12, 13) n'entre en contact avec la pièce à travailler (2),
- inversion du sens de rotation de la pièce à travailler (2),
- déplacement supplémentaire de l'outil d'ébavurage (1) par rapport à la pièce à travailler (2) tout en maintenant le parallélisme entre l'axe de symétrie (S) et l'axe central (M) et ébavurage des flancs de dent (6) de la denture interne (3) par l'outil d'ébavurage (1), ce faisant non rotatif, au moyen de la seconde plaque de coupe (13).

2. Procédé selon la revendication 1, **caractérisé en ce que** la face avant de la pièce à travailler (2) est ébavurée à la fois au moyen de la première plaque de coupe (12) et au moyen de la seconde plaque de coupe (13).

3. Procédé selon la revendication 2, **caractérisé en ce qu'**une tige (9) de l'outil d'ébavurage (1) reste agencée dans la cavité de la pièce à travailler (2) entourée par la denture interne (3) pendant tout le processus d'ébavurage effectué par les deux plaques de coupe (12, 13).

4. Procédé selon l'une des revendications 1 à 3, **caractérisé en ce qu'**entre l'usinage de la pièce à travailler (2) par la première plaque de coupe (12) et l'usinage de la pièce à travailler (2) par la seconde plaque de coupe (13), une course à vide du taillage est effectuée.

5. Outil (1) pour ébavurer une pièce à travailler à denture interne (2), avec une ébauche en forme de T, qui est formée par une tige (9) définissant un axe central (M) et une section de maintien de plaque de coupe (10) qui est alignée transversalement à celui-ci, qui représente la barre transversale du T et sur laquelle sont fixées deux plaques de coupe (12, 13) diamétralement opposées par rapport à l'axe central (M), formées en symétrie miroir l'une de l'autre par rapport à un plan passant par l'axe central (M), les arêtes de coupe (15, 16) des plaques de coupe (12, 13) faisant face à la tige (9).

6. Outil (1) selon la revendication 5, **caractérisé en ce qu'**un angle (2 x α) d'au moins 165° et d'au plus 178° est formé entre les arêtes de coupe (15, 16).

7. Outil selon la revendication 5 ou 6, **caractérisé en ce que** les plaques de coupe (12, 13) sont réalisées sous forme de plaquettes amovibles.
